Europäisches Patentamt

European Patent Office

Office européen des brevets

(11) Veröffentlichungsnummer : **0 017 254**
**B2**

(12) # NEUE EUROPÄISCHE PATENTSCHRIFT

(45) Veröffentlichungstag der neuen Patentschrift :
20.01.88

(21) Anmeldenummer : 80101875.5

(22) Anmeldetag : 08.04.80

(51) Int. Cl.⁴ : **F 16 L 59/12**, F 16 L 59/02,
F 16 L 59/16, B 29 D 23/00,
B 29 C 63/02

(54) Wärmegedämmtes Rohr und Verfahren zu seiner Herstellung.

(30) Priorität : 06.04.79 DE 2913876

(43) Veröffentlichungstag der Anmeldung :
15.10.80 Patentblatt 80/21

(45) Bekanntmachung des Hinweises auf die Patenterteilung : 22.06.83 Patentblatt 83/25

(45) Bekanntmachung des Hinweises auf die Entscheidung
über den Einspruch : 20.01.88 Patentblatt 88/03

(84) Benannte Vertragsstaaten :
AT BE CH DE FR GB IT LI LU NL SE

(56) Entgegenhaltungen :
CH-A- 151 014
CH-A- 222 324
DE-A- 1 928 977
DE-U- 7 234 746
FR-A- 2 309 779
GB-A- 866 925
GB-A- 1 337 394
US-A- 2 790 464
US-A- 3 382 136
US-A- 3 728 187
US-A- 4 084 842

(73) Patentinhaber : G + H MONTAGE GmbH
Westendstrasse 17
D-6700 Ludwigshafen (DE)

Deutsche Fibercast GmbH
Postfach 1410
D-5180 Eschweiler (DE)

(72) Erfinder : Ball, Hugo, Dr. rer. nat.
Im Schreck 4
D-6702 Bad Dürkheim (DE)
Erfinder : Kohlstadt, Wilhelm
Eichholzstrasse 25
D-5810 Witten-Rüdinghausen (DE)
Erfinder : Lassak, Günter
Weberstrasse 50
D-5163 Langerwehe (DE)
Erfinder : Heinrich, Friedhelm
Am Iländ 23
D-4355 Waltrop (DE)

(74) Vertreter : Kuhnen, Wacker & Partner
Schneggstrasse 3-5 Postfach 1729
D-8050 Freising (DE)

EP 0 017 254 B2

## Beschreibung

Die Erfindung betrifft ein wärmegedämmtes Rohr nach den Oberbegriff des Anspruchs 1, sowie ein zu seiner Herstellung besonders geeignetes Verfahren.

Wärmegedämmte Rohre zum Transport heißer Medien werden überwiegend in der chemischen Industrie, in Raffinerien und dgl., sowie zum Transport von Fernwärme eingesetzt. Im allgemeinen besteht das mediumführende Innenrohr aus Metall, insbesondere aus Stahl, Edelstahl, Gußeisen, Kupfer oder ähnlichen Metallen.

Die wirtschaftlichen Lösungen mit Innenrohren aus Stahl oder Gußeisen haben den Nachteil der Gefährdung durch Korrosion von außen bei Durchfeuchtung der Wärmedämmschicht oder der Korrosion von innen, wenn aggressive Medien wie Brauchwasser, Kondensationswasser, Wasser mit Zusätzen von Mineralien und dgl. oder chemische Stoffe durchgepumpt werden. Vielfach ist man deshalb zur Ausschaltung der Korrosionsgefahr von innen auf die Anwendung von Kupferleitungen oder Leitungen aus Edelstahl angewiesen, ohne daß damit die Korrosionsgefahr von außen etwa durch Lochfraß bei Durchfeuchtung der Wärmedämmschicht ganz vermieden werden könnte.

Eine weiterer erheblicher Nachteil von Rohrleitungen mit Innenrohren aus Metall ist die Wärmeausdehnung, die in Verbindung mit dem meist recht hohen E-Modul bei größeren Temperaturdifferenzen zu Stauchspannungen führt, die die Fließgrenze des Materials übersteigen können, falls nicht durch besondere Vorkehrungen eine Wärmedehnung der Rohre ohne übermäßigen Spannungsaufbau ermöglicht wird.

Besonders bei erdverlegten, warmbetriebenen Rohrleitungen, wie sie für den Transport von Fernwärme eingesetzt werden, treten erhebliche Probleme auf, die nur durch den Einbau von Kompensatoren gelöst werden können, welche die Wärmedehnung ermöglichen. Als Kompensatoren sind entweder Axialkompensatoren üblich, die aber erhöhtem Verschleiß unterliegen und besonderer Wartung bedürfen, oder es werden gebogene L-, Z- oder U-Kompensatoren eingesetzt, die wiederum den Strömungswiderstand innerhalb der Rohrleitung erhöhen, zu einem vermehrten Materialeinsatz zwingen und bei der Verlegung der Rohrleitungen im Erdreich elastische Räume erfordern, damit die durch die Ausdehnung bedingte Lageänderung der Rohre in den Bögen überhaupt ermöglicht werden kann.

Aus der BE-A-749 911 ist ein wärmegedämmtes Rohr nach dem Oberbegriff des Anspruchs 1 bekannt, bei dem zwischen der Wärmedämmschicht und dem Außenumfang des Innenrohres eine Dampfsperre in Form einer Metallfolie angeordnet ist, welche der Form des Außenumfanges des Rohres folgt und ein Eindringen von Feuchtigkeit in die Wärmedämmschicht vermeiden soll. Man hat auch schon glasfaserverstärkte Kunststoffrohre, insbesondere als Wickelrohre oder als Schleuderrohre, hergestellt, die die Gefahr der Korrosion eliminieren und die mit der Wärmedehnung der Rohre verbundenen Probleme lösen.

Wickelrohre auf der Basis von Polyvinylester erreichen eine Langzeitformbeständigkeit für Temperaturen bis 95 °C. Schleuderrohre auf der Basis von Epoxydharz haben sogar eine Formbeständigkeit unter Langzeitbelastungen bei Temperaturen bis zu 150 °C. Der Berstdruck derartiger Rohre beträgt bei Zimmertemperatur je nach Laminataufbau mehr als 200 bar. Mit höherer Temperatur nimmt die Druckfestigkeit der Rohre ab, aber selbst bei Betriebstemperaturen bis + 150 °C dürfen Schleuderrohre mit Betriebsdrücken bis 6 bar eingesetzt werden, so daß derartige Rohre, z. B. für Fernwärmeleitungen, praktisch unbegrenzt einsatzfähig sind.

Weitere Vorteile glasfaserverstärkter Kunststoffrohre sind das geringe Gewicht und die schnelle Verlegbarkeit, sowie die einfache Verbindungstechnik der Rohre durch Kleben, Schrauben, Flanschverbindungen und dgl.

Kunststoffrohre haben allgemein geringe Reibungsverluste gegen das durchströmende Medium, wodurch häufig der Rohrquerschnitt geringer gemacht werden kann, was nicht nur Einsparungen an Material, sondern auch Reduzierungen des Wärmeverlustes zur Folge hat.

Eine weiterer besonderer Vorteil ist die Möglichkeit, die Rohre kompensationsfrei zu verlegen. Dies ergibt sich daraus, daß einem vergleichsweise geringen Elastizitätsmodul eine relativ hohe axiale Druckfestigkeit gegenübersteht, so daß trotz des im Vergleich zu Stahl hohen thermischen Ausdehnungskoeffizienten die bei der behinderten Wärmeausdehnung der Rohre entstehenden Stauchspannungen unterhalb der Fließgrenze bleiben. Dies mag folgendes Rechenbeispiel verdeutlichen :

Für ein Schleuderrohr auf Epoxydharzbasis beträgt die Druckfestigkeit $\sigma_{max}$ in axialer Richtung 240 N/mm$^2$, der Elastizitätsmodul E 11 000 N/mm$^2$, und der thermische Ausdehnungskoeffizient $\alpha$ bei 20 °C beträgt $23 \times 10^{-6}$ K$^{-1}$.

Bei völliger Behinderung der Ausdehnung infolge Erwärmung errechnet sich die auftretende Druckspannung zu $\sigma = \alpha \times \Delta T \times E$, worin $\alpha$ der Wärmeausdehnungskoeffizient und $\Delta T$ die Temperaturdifferenz gegenüber Verlegetemperatur darstellt. Für $\Delta t = 120$ °K ergibt sich somit $\sigma = 23 \times 10^{-6} \times 120 \times 11\,000$ N/mm$^2$ = 30,36 N/mm$^2$. Hieraus ergibt sich gegen die zulässige Spannung $\sigma_{max}$ ein Sicherheitsfaktor von 6.

Ein wesentlicher Nachteil der Kunststoffrohre besteht aber in der Wasserdampfdurchlässigkeit. So wurde z. B. errechnet, daß bei einem Wasserdampfdiffusionswiderstand von $\mu = 185\,000$ für ein Rohr mit 6 mm Wandstärke und dem Betrieb des Rohres mit Wasser von 95 °C pro m$^2$ und Jahr 400 g Wasserdampf durchgelassen werden. Wenn die Wärmedämmung nach außen einen wasserdampfdiffusionsdichten Abschluß hat, wie dies z. B. ein Blechmantel bei der Freiverlegung der Rohre oder eine Kunststoffummantelung bei erdverlegten Rohren darstellt, so ist mit der Kondensation dieser Wasserdampfmengen innerhalb der Wärmedämmung zu rechnen, was eine allmählich fortschreitende Durchfeuchtung der Wärmedämmung und damit eine Herabsetzung der Dämmstoffwirkung bedeutet.

Dem wird gemäß der Lehre der BE-A-749 911 durch die Dampfsperre in Form der Metallfolie entgegengewirkt. Zur Herstellung eines solchen Rohres wird offensichtlich eine bandförmige Metallfolie mit einer dem Außenumfang des Rohres zuzüglich einer Überlappungsbreite entsprechenden Breite vorgefertigt und um den Außenumfang des Rohres umgeschlagen. Dabei läßt sich nicht vermeiden, daß, wenn die Metallfolie auch Wellungen od. dgl. im Außenumfang des Kunststoffrohres folgt, Lufttaschen oder Luftporen zwischen der Metallfolie und dem Außenumfang des Rohres verbleiben. Derartige Lufttaschen oder Luftporen erscheinen als unschädlich, da dennoch eine dampfdichte Abschirmung der Wärmedämmschicht gewährleistet erscheint.

Tatsächlich aber führen derartige Lufttaschen oder Luftporen letztendlich dazu, daß die durch die Metallfolie gebildete Dampfsperre zumindest im Laufe der Zeit unwirksam wird. Dabei ist davon auszugehen, daß bei einer Betriebstemperatur von z. B. 130 °C im Inneren des Innenrohres aus glasfaserverstärktem Kunststoff ein Temperaturabfall zur Außenseite des Mantelrohres von z. B. 120 °K vorliegt. Dieser Temperaturabfall ist im wesentlichen auf die im Normalfall beispielsweise 7 mm dicke Wand des Innenrohres und die etwa 20 bis 40 mm dicke Wärmedämmschicht etwa aus Polyurethan-Hartschaum in der Weise verteilt, daß über die Wand des Innenrohres ein Temperaturabfall von etwa 10 °K auftritt.

Wenn nun zwischen dem Außenumfang des Innenrohres und der Dampfsperre Hohlräume etwa auch in Form kleinster Luftporen vorhanden sind, so würde bei mit Sättigungsdruck im Inneren des Innenrohres vorliegendem Medium als Folge des Temperaturabfalles über die Wand des Innenrohres eine Wasserdampfkondensation in Luftporen oder Lufttaschen auf der Innenseite der Dampfsperre stattfinden, wenn Dampf durch die Wand des Innenrohres hindurch dorthin gelangt. Diese Wasserdampfkondensation führt zur Bildung von Wassertaschen, von denen eine zerstörende Wirkung im Sinne einer möglichen Hydrolyse der verstärkenden Glasfasern im glasfaserverstärkten Kunststoff des Innenrohres und dadurch ausgeht, daß die Metallfolie unter dem Innendruck an den Stellen derartiger Wassertaschen aufplatzen, aufreißen oder abschälen kann.

Diese, der Erfindung zugrundeliegende Erkenntnis führt zu der Aufgabenstellung, ein wärmegedämmtes Rohr der im Oberbegriff des Anspruchs 1 umrissenen Gattung zu schaffen, welches eine Aufrechterhaltung der Dampfsperre durch eine unbeschädigte Metallfolie über lange Zeit hinweg gewährleistet.

Die Lösung dieser Aufgabe erfolgt durch das kennzeichnende Merkmal des Anspruchs 1.

Dadurch, daß eine luftporenfreie Aufbringung der Metallfolie auf den Außenumfang des Innenrohres aus glasfaserverstärktem Kunststoff erfolgt, liegen keinerlei Hohlräume, auch keine mikroskopisch kleinen Hohlräume, für eine Kondensation eingedrungenen Wasserdampfes an der Innenseite der Metallfolie vor. Damit ist die Möglichkeit einer Wasserdampfkondensation an der Innenseite der die Dampfsperre bildenden Metallfolie vermieden.

Darüber hinaus wird die die Dampfsperre bildende Metallfolie durch Vermeidung von Lufttaschen und Luftporen auch mechanisch widerstandsfähiger. Die Innenrohre aus glasfaserverstärktem Kunststoff werden, nicht zuletzt auch zur Gewährleistung einer luftporenfreien Aufbringung der Metallfolie, samt der darauf angebrachten Metallfolie vorgefertigt und so zur Umschäumung bzw. Fertigstellung des wärmegedämmten Rohres zum Montageort transportiert. Außerdem ist erforderlich, daß Abstandshalter zur koaxialen Lagerung des Innenrohres im Mantelrohr aufgebracht werden. Bei all diesen Manipulationen besteht die Gefahr der mechanischen Verletzung der Metallfolie. Im Falle einer vollständigen Vorfertigung des wärmegedämmten Rohres können bei entsprechend vorsichtiger Handhabung zwar Verletzungen der Metallfolie leichter vermieden werden, jedoch besteht eine entsprechende Verletzungsgefahr bei vorstehenden Enden des mit der Folie versehenen Innenrohres am Spitzende eines Rohrschusses, sofern die Verbindung der Rohrschüsse am Montageort über entsprechende Muffenverbindungen an solchen Spitzenden erfolgt. Wenn die Metallfolie luftporenfrei auf den Außenumfang des Innenrohres angebracht ist, so liegt überall flächig eine kraftschlüssige Verbindung mit der Wand des Innenrohres durch Adhäsion vor, so daß keine Stellen der Metallfolie ohne Stützung von der Innenseite her auftreten, die bei mechanischen Einwirkungen erhöht verletzungsgefährdet wären.

Die Unteransprüche 2 bis 10 haben vorteilhafte Weiterbildungen des erfindungsgemäßen wärmegedämmten Rohres zum Inhalt. Durch die nach den Ansprüchen 3 bis 9 ausgebildete spezielle Muffenverbindung wird auf einfache Weise erreicht, daß auch im Stoßbereich benachbarter Rohrschüsse keine Unterbrechung der durch die Metallfolie gebildeten Dampfsperre auftritt.

Der Ansprüche 11 hat ein für eine luftporenfreie Aufbringung der die Dampfsperre bildenden Metallfolie auf den Außenumfang des Innenrohres besonders geeignetes Herstellungsverfahren zum Inhalt, während die Ansprüche 12 und 13 vorteilhafte Weiterbildungen dieses Verfahrens wiedergeben.

Weitere Einzelheiten der Erfindung ergeben sich aus der nachfolgenden Beschreibung einer Ausführungsform anhand der Zeichnung.

Es zeigt

Fig. 1 einen Axialschnitt durch einen fabrikmäßig vorgefertigten Rohrschuß eines erfindungsgemäßen wärmegedämmten Rohres und

Fig. 2 zwei Rohrschüsse in einer Darstellung gemäß Fig. 1 in zur Bildung eines Längenabschnittes der erfindungsgemäßen wärmegedämmten Rohres verbundenem Zustand.

In der Zeichnung ist mit 1 ein Innenrohr bezeichnet, welches aus glasfaserverstärktem Kunststoff besteht und zur Mediumführung dient. Das Innenrohr 1 ist an seinem Außenumfang von einer Metallfolie 2 umgeben, die luftporenfrei auf das Innenrohr 1 aufgebracht ist und eine Dampfsperre bildet. Am Außenumfang des mit der Metallfolie 2 versehenen Innenrohres ist eine Wärmedämmschicht 3 angeordnet, deren Außenumfang durch ein Mantelrohr 4 abgeschlossen ist, welches ebenfalls aus Kunststoff bestehen kann. Abstandhalter 5 stützen das Innenrohr 1 im Mantelrohr 4 zentrisch ab.

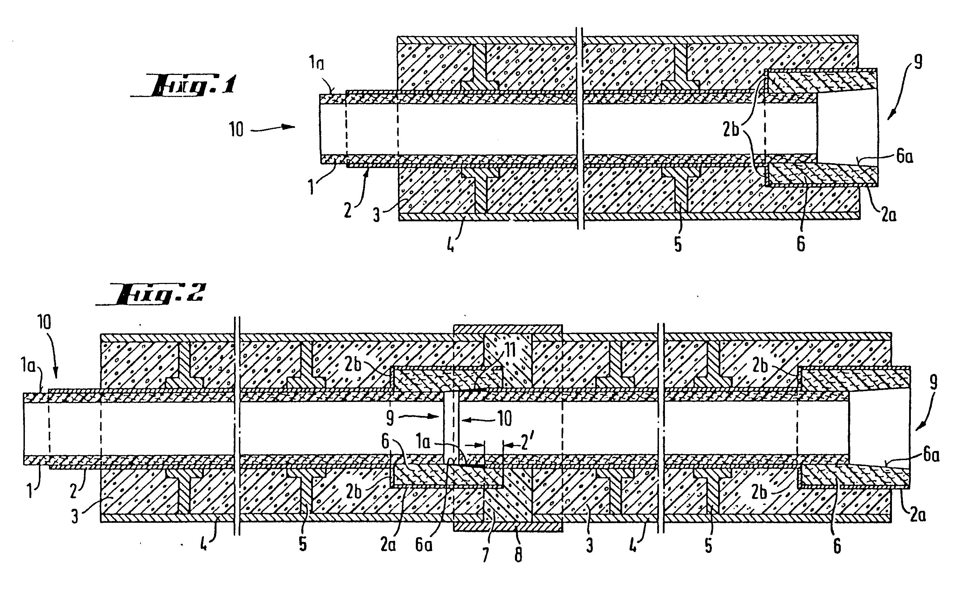

Jeder Rohrschuß des veranschaulichten Rohres ist in der aus der Zeichnung ersichtlichen Weise mit einem Stumpfende 9 und einem Spitzende 10 ausgebildet. Am Stumpfende 9 ist an der Außenseite des Innenrohres 1 eine im wesentlichen hohlzylindrische Überschubmuffe 6 beispielsweise durch Klebung befestigt, wobei ein in die Überschubmuffe 6 ragender Endbereich 1a des Innenrohres 1 keine Metallfolie 2 trägt, so daß eine innige Verbindung zwischen der Überschubmuffe 6 und der Außenfläche des Innenrohres 1 gewährleistet werden kann. Die Überschubmuffe 6 kann aus dem gleichen Material wie das Innenrohr 1 hergestellt sein und trägt an ihrem Außenumfang eine Metallfolie 2a, die von derselben Art wie die Metallfolie 2 am Außenumfang des Innenrohres 1 sein und auch ebenso wie diese luftporenfrei auf den Umfang der Überschubmuffe 6 aufgebracht sein kann, so daß sich dort eine entsprechende Dampfsperre ergibt. Wie in der Zeichnung veranschaulicht ist, weist die Überschubmuffe 6 eine sich nach außen hin nach Art einer Einlaufschräge erweiternde Überschuböffnung 6a auf, in die der benachbarte Rohrschuß mit seinem Spitzende 10 eingreifen kann, wie dies anhand von Fig. 2 deutlich wird.

Hierzu ist im Bereich des Spitzendes 10 das Innenrohr 1 über das Mantelrohr 4 und die Wärmedämmschicht 3 axial hinausgeführt. Die Metallfolie 2 umgibt auch das ausragende Ende des Innenrohres 1 am Spitzende 10, reicht jedoch nicht bis ganz zu dessen vorderem Ende, sondern läßt den Endbereich 1a des Innenrohres 1 am Spitzende 10 nackt. Mit diesem nackten Endbereich 1a kommt das Innenrohr 1 in der aus Fig. 2 ersichtlichen Weise an den inneren Wänden der Überschuböffnung 6a zur Anlage und kann dort mit dem Material der Überschubmuffe 6 verklebt werden. Hierzu eignet sich ein in Fig. 2 bei 11 angedeuteter Kleber, der in flüssiger Form bei der Montage zwischen der Außenseite des Endbereiches 1a des Spitzendes 10 und der Überschuböffnung 6a der Überschubmuffe 6 eingebracht werden kann und im wesentlichen aus demselben Kunststoffmaterial bestehen kann, aus dem das Innenrohr 1 und/oder die Überschubmuffe 6 gefertigt sind, im Beispielsfalle von glasfaserverstärktem Epoxydharz als Material des Innenrohres 1 und der Überschubmuffe 6 also ebenfalls Epoxydharz ist. Am nackten Endbereich 1a kann so eine innige Verbindung zwischen dem Material des Innenrohres 1 und der Überschubmuffe 6 erfolgen. Die Metallfolie 2 reicht jedoch am Spitzende 10 so weit, daß sie ebenfalls noch von der Überschuböffnung 6a der Überschubmuffe 6 axial übergriffen wird.

Nach der erläuterten Verbindung des Stumpfendes 9 des einen Rohrschusses mit dem Spitzende 10 des benachbarten Rohrschusses, wie aus Fig. 2 ersichtlich ist, kann eine Ausschäumung des zwischen den benachbarten Wärmedämmschichten 3 und Mantelrohren 4 verbleibenden Spaltes mit Ortschaum 7 erfolgen, wobei am Außenumfang der benachbarten Mantelrohrenden eine wasserdichte Manschette 8 angeordnet ist, die als Blechmantel ausgebildet sein kann.

Es hat sich gezeigt, daß die Diffusion von Wasserdampf durch das Kunststoffmaterial des Innenrohres 1 und der Überschubmuffe 6 praktisch ausschließlich in radialer Richtung erfolgt. Daher ergibt sich in überraschend einfacher Weise ein dampfdichter Übergang im Bereich der Überschubmuffe 6 schon alleine dadurch, daß deren Außenumfang die Metallfolie 2a trägt, welche also radial versetzt die durch die Metallfolie 2 am Außenumfang des Innenrohres 1 gebildete Dampfsperre axial forsetzt. Infolge der praktisch ausschließlich radialen Propagation der Diffusion genügt ein vergleichsweise kleiner, in Fig. 2 mit 2' bezeichneter Überdeckungsbereich zwischen der Folie 2a am Außenumfang der Überschubmuffe 6 und der Folie 2 am Außenumfang des Innenrohres 1 im Bereich des Spitzendes 10, um dort einen praktisch völlig dampfdichten Übergang zu erzielen, ähnlich dem Prinzip einer Labyrinthdichtung, wobei die Diffusion der dadurch entstehenden Biegung des möglichen Diffusionsweges nicht folgt. Am rückwärtigen Ende der Überschubmuffe 6 könnte diese die Metallfolie 2 am Außenumfang des Innenrohres ein entsprechendes Stück übergreifen, um auch dort einen entsprechenden Überdeckungsbereich zu erzielen, ohne daß dadurch die Klebung zwischen Überschubmuffe 6 und Innenrohr 1 im übrigen beeinträchtigt würde. Es hat sich jedoch gezeigt, daß es bereits ausreicht, die rückwärtige Stirnfläche der Überschubmuffe 6 mit einer von Hand nachträglich aufgebrachten ringförmigen Folie 2b zu versehen, die nicht luftporenfrei aufgebracht sein muß, da die radiale Ausrichtung des Diffusionsweges so ausgeprägt ist, daß der von der Folie 2b abgedeckte Bereich von der Diffusion her praktisch nicht belastet ist.

Zur Herstellung des wärmegedämmten Rohres werden die einzelnen Schüsse des Innenrohres 1 mit darauf angeordneter Metallfolie 2 sowie die Überschubmuffen 6 mit darauf angeordneter Metallfolie 2a vorgefertigt, während alle nachfolgenden Fertigungsstufen wahlweise fabrikseitig in Vorfertigung oder am Ort erfolgen können. So kann etwa zur Bildung der Wärmedämmschicht 3 wahlweise eine Ausschäumung mit Ortschaum oder eine fabrikmäßige Ausschäumung oder aber eine Verwendung von Segmentschalen erfolgen, die fabrikmäßig vorgefertigt sind und als Formkörper in den Raum zwischen die Mantelrohre 4 und dem Innenrohr 1 eingebracht werden.

Zur Vorfertigung des Innenrohres 1 mit der Metallfolie 2 kann insbesondere bei Vervendung von Kunststoff auf der Basis von Epoxydharz ein Schleuderverfahren angewandt werden, wobei die Innenwand der Schleuderform mit der Metallfolie 2 ausgekleidet wird, darauf in der üblichen Weise die Glasfasermatten eingelegt und mit dem angeschleuderten Epoxydharz durchtränkt werden, wobei das Epoxydharz zugleich die luftporenfreie Verbindung mit der Metallfolie unter Bildung gewissermaßen eines einstückigen Bauteiles aus Innenrohr 1 und Metallfolie 2 gewährleistet. Dabei kann die bandförmig vorgefertigte Metallfolie in Umfangsrichtung ein solches Übermaß aufweisen, daß sich eine Überlappung der Ränder ergibt, zwischen die in gewissem Umfang Epoxydharz eindringen kann. Für die Dampfdichtheit ist dies unschädlich, da die Überlappung der Ränder alleine ähnlich, wie dies im Zusammenhang mit dem Überdeckungsbereich 2' erläutert ist, eine Diffusion selbst bei Vorliegen eines mit Epoxydharz angefüllten Spaltes zwischen den Rändern vermeidet, da der mögliche Diffusionsweg nicht radial, sondern in Umfangsrichtung liegen würde.

**Patentansprüche**

1. Wärmegedämmtes Rohr für warmbetriebene Leitungen mit einem zur Mediumführung vorgesehenen Innenrohr (1) aus Kunststoff, das mit Abstand von einem Mantelrohr (4) umgeben ist, und bei dem der Ringraum zwischen Innenrohr (1) und Mantelrohr (4) mit einer Wärmedämmschicht (3) insbesondere aus Schaumkunststoff wie Polyurethan-Hartschaum ausgefüllt ist, wobei am Außenumfang des Innenrohres eine Dampfsperre in Form einer Metallfolie (2) vorgesehen ist, dadurch gekennzeichnet, daß die Metallfolie (2) luftporenfrei mit dem Außenumfang des Innenrohres (1), dessen Kunststoffmaterial glasfaserverstärkt ist, innig verbunden ist.

2. Rohr nach Anspruch 1, dadurch gekennzeichnet, daß die vorzugsweise aus Aluminium bestehende Metallfolie (2) mit ihren Rändern überlappend angeordnet ist.

3. Rohr nach Anspruch 1 oder 2, dadurch gekennzeichnet, daß bei Muffenverbindung einzelner Rohrschüsse ein Stumpfende (9) jedes Rohrschusses mit einer wasserdampfdichten Überschubmuffe (6) versehen und das andere Ende des Rohrschusses als Spitzende (10) ausgebildet ist, an dem das Mantelrohr (4) und die Wärmedämmschicht (3) kürzer gehalten sind als das Innenrohr (1) und die Metallfolie (2).

4. Rohr nach Anspruch 3, dadurch gekennzeichnet, daß die Metallfolie (2) vor dem äußeren Endbereich (1a) des Innenrohres (1) am Spitzende (10) endet, jedoch bei in die Muffe (6) eines benachbarten Rohrschusses hineingestecktem Spitzende (10) einen Überdeckungsbereich (2') mit der Muffe (6) aufweist.

5. Rohr nach einem der Ansprüche 3 oder 4, dadurch gekennzeichnet, daß die Überschubmuffe (6) aus insbesondere glasfaserverstärktem Kunststoff besteht und an ihrer Außenseite als Dampfsperre eine vorsugzweise ebenfalls luftporenfrei aufgebrachte Metallfolie (2a) trägt.

6. Rohr nach Anspruch 4 oder 5, dadurch gekennzeichnet, daß der nackte Endbereich (1a) des Innenrohres (1) mit der Überschuböffnung (6a) der Überschubmuffe (6) mittels eines Kunststoffklebers (11) verklebt ist.

7. Rohr nach Anspruch 6, dadurch gekennzeichnet, daß das Material des Kunststoffklebers (11) dem Kunststoffmaterial des Innenrohres (1) und/oder der Überschubmuffe (6) entspricht.

8. Rohr nach einem der Ansprüche 1 bis 7, dadurch gekennzeichnet, daß der Kunststoff für das Innenrohr (1) und/oder die Überschubmuffe (6) Epoxydharz ist.

9. Rohr nach einem der Ansprüche 1 bis 7, dadurch gekennzeichnet, daß der Kunststoff für das Innenrohr (1) und/oder die Überschubmuffe (6) Polyestervinylharz ist.

10. Rohr nach einem der Ansprüche 3 bis 9, dadurch gekennzeichnet, daß Spalte zwischen den benachbarten Enden der Wärmedämmschichten (3) benachbarter Rohrschüsse ausgeschäumt und daß die benachbarten Enden des Mantelrohres (4) mit einer diese übergreifenden wasserdichten Manschette (8) verbunden sind.

11. Verfahren zur Herstellung eines wärmegedämmten Rohres nach wenigstens einem der Ansprüche 1 bis 10, bei dem das mit der Metallfolie versehene Innenrohr eines Rohrschusses mit der Muffe, der Wärmedämmschicht und dem Mantelrohr umgeben und verbunden wird, dadurch gekennzeichnet, daß das Innenrohr des Rohrschusses mit der Metallfolie in der Weise vorgefertigt wird, daß die Metallfolie nach Art einer Auskleidung an der Innenwand einer Schleudeform angeordnet wird, darauf in der an sich bekannten Weise die Fasermatten aufgebracht und mit dem flüssigen Kunststoff, insbesondere Epoxydharz, durch Aufschleudern durchtränkt werden.

12. Verfahren nach Anspruch 11, dadurch gekennzeichnet, daß die in Längsrichtung der Schleudeform verlaufenden Ränder der Metallfolie einander vorzugsweise um mehrere Zentimeter überlappen.

13. Verfahren nach einem der Ansprüche 11 und 12, dadurch gekennzeichnet, daß die Muffe mit der an ihrem Außenumfang angeordneten Metallfolie ebenso wie das Innenrohr mit Metallfolie, im Falle der Verwendung von Epoxydharz insbesondere im Schleudergußverfahren mit unmittelbarem Aufschleudern des Epoxydharzes auf die Innenfläche der Metallfolie, hergestellt wird.

**Claims**

1. A thermally insulated pipe for piping systems run in a hot condition, having an inner pipe for a liquid, made of a synthetic resin and placed within, and spaced from an outer casing, and in the case of which the space of ring-like cross-section between the inner pipe and the outer casing tube is filled with a thermally insulating layer, the same being made more specially of a resin foam material such as hard urethane foam material, and there being a vapor barrier layer on the outer face of the inner pipe, the barrier layer being in the form of a metal foil, characterized in that the metal foil (2) is rested against the outer face of the inner pipe (1) without any air pockets, the resin material of the inner pipe being reinforced with glass fiber.

2. A pipe as claimed in claim 1, characterized in that the metal foil (2), that is more specially made of aluminum, is placed in position with its edges overlapping.

3. A pipe as claimed in claim 1 or claim 2, characterized in that in the case of a socket joint between separate lengths of pipe a blunt end (9) of each length of pipe has a water vapor-tight slip-on socket (6) and the other end of the said pipe length is in the form of a sharp end (10), on which the outer casing tube (4) and the thermally insulating layer (3) are made shorter than the inner pipe (1) and the metal foil (2).

4. A pipe as claimed in claim 3, characterized in that the metal foil (2) comes to an end short of the outer end part (1a) of the inner pipe (1) at the sharp end (10), while however when the sharp end (10) is slipped into the socket (6) of the next length of pipe, it has a degree of overlap (2') with the socket (6).

5. A pipe as claimed in claim 3 or claim 4, characterized in that the slip-on socket (6) is made more specially of synthetic resin reinforced with glass fiber and at its outer face has metal foil (2a) thereon as a vapor barrier, such layer being more specially positioned thereon without any air pockets as well.

6. A pipe as claimed in claim 4 or claim 5, characterized in that the uncovered end part (1a) of the inner pipe (1) is adhesively joined by way of a synthetic resin adhesive with the slip-on opening (6a) of the slip-on socket (6).

7. A pipe as claimed in claim 6, characterized in that the material of the synthetic resin adhesive (11) is the same as the synthetic resin material of the inner pipe (1) and/or of the slip-on socket (6).

8. A pipe as claimed in any one of claims 1 to 7 characterized in that the synthetic resin for the inner pipe (1) and/or for the slip-on socket (6) is epoxy resin.

9. A pipe as claimed in any one of claims 1 to 7 characterized in that the synthetic resin for the inner pipe (1) and/or the slip-on socket (6) is polyestervinyl resin.

10. A pipe as claimed in any one of claims 3 to 9, characterized in that the spaces between the any two ends of the insulating layers (3) of one length of pipe and the next one are filled with foam material and each end of the outer casing tube (4) and the next end thereto are joined together with a watertight boot (8) placed round these two ends.

11. A process for making a thermally insulated pipe as claimed in at least one of claims 1 to 10, in which process the inner pipe, having the metal foil, of a length of pipe has the socket, the thermally insulating layer and the outer casing tube put round it and joined to it, characterized in that the inner pipe of the length of pipe is ready made as a unit with the metal foil by an operation in which the metal foil is placed against the inner face of a centrifugal mold as a sort of lining, whereupon in a known way the fiber mats are put on and are impregnated with the liquid synthetic resin, that is more specially epoxy resin, by centrifuging.

12. A process as claimed in claim 11 characterized in that the edges, running in the length direction of the centrifugal mold, of the metal foil are overlapped, more specially by some centimeters.

13. A process as claimed in any one of claims 11 and 12, characterized in that the socket is produced with the metal foil placed on its outer face, like the inner pipe and metal foil, in the case of the use of epoxy resin, more specially by centrifugal casting, the epoxy resin being centrifuged onto the inner face of the metal foil directly.

**Revendications**

1. Tube calorifugé pour canalisations en service à chaud, comprenant un tube intérieur (1) en matière plastique prévu pour conduire le fluide, qui est entouré d'un tube enveloppe (4) à un certain écartement et dans lequel l'espace annulaire compris entre le tube intérieur (1) et le tube enveloppe (4) est rempli d'une couche de calorifuge (3), faite en particulier d'une matière plastique en mousse telle qu'une mousse dure de polyuréthane, cependant qu'un écran de vapeur présenté sous la forme d'une pellicule métallique (2) est prévu à la périphérie extérieure du tube intérieur, caractérisé en ce que la pellicule métallique (2) est liée intimement, sans inclusion de pores d'air, à la périphérie extérieure du tube intérieur (1) dont la matière plastique constitutive est renforcée de fibre de verre.

2. Tube suivant la revendication 1, caractérisé en ce que la pellicule métallique (2), de préférence réalisée en aluminium, est disposée avec chevauchement de ses bords.

3. Tube suivant la revendication 1 ou 2, caractérisé en ce que, dans le cas d'un raccordement à manchon de plusieurs tronçons de tube, une extrémité plate (9) de chaque tronçon de tube est munie d'un manchon d'emboîtement (6) étanche à la vapeur d'eau et que l'autre extrémité du tronçon de tube est réalisée sous la forme d'une extrémité à pointe (10) à laquelle le tube enveloppe (4) et la couche de calorifuge (3) sont plus courts que le tube intérieur (1) et que la pellicule métallique (2).

4. Tube suivant la revendication 3, caractérisé en ce que la pellicule métallique (2) se termine avant la région terminale extérieure (1a) du tube intérieur (1) à l'extrémité à pointe (10) mais que, dans une extrémité à pointe (10) emmanchée dans le manchon (6) d'un tronçon de tube voisin, elle présente une région de recouvrement (2') par rapport au manchon (6).

5. Tube suivant l'une des revendications 3 ou 4, caractérisé en ce que le manchon d'emboîtement (6) est composé de matière plastique, en particulier renforcée de fibre de verre, et porte sur sa face externe, en qualité d'écran de vapeur, une pellicule métallique (2a) qui est de préférence également appliquée sans pores d'air.

6. Tube suivant la revendication 4 ou 5, caractérisé en ce que la région terminale nue (1a) du tube intérieur (1) est collée à l'ouverture d'emboîtement (5a) du manchon d'emboîtement (6) au moyen d'une colle à base de matière plastique (11).

7. Tube suivant la revendication 6, caractérisé en ce que la matière de la colle (11) à base de matière plastique correspond à la matière plastique du tube intérieur (1) et/ou du manchon d'emboîtement (6).

8. Tube suivant l'une des revendications 1 à 7, caractérisé en ce que la matière plastique utilisée pour le tube intérieur (1) et/ou pour le manchon d'emboîtement (6) est une résine époxyde.

9. Tube suivant l'une des revendications 1 à 7, caractérisé en ce que la matière plastique utilisée pour le tube intérieur (1) et/ou pour le manchon d'emboîtement (6) et une résine de polyester vinyle.

10. Tube suivant l'une des revendications 3 à 9, caractérisé en ce que les fentes entre les extrémités adjacentes des couches de calorifuge (3) des tronçons de tubes voisins sont remplies de mousse et que les extrémités adjacentes du tube enveloppe (4) sont réunies au moyen d'une manchette étanche à l'eau (8) qui les recouvre.

11. Procédé de fabrication d'un tube calorifugé suivant au moins l'une des revendications 1 à 10, dans lequel le tube intérieur d'un tronçon de tube qui est muni de la pellicule métallique est entouré d'un manchon, de la couche calorifuge et du tube enveloppe et réunis à ces éléments, caractérisé en ce que le tube intérieur du tronçon de tube est préfabriqué avec la pellicule métallique de la façon suivante : on dispose la pellicule métallique à la façon d'un habillage contre la paroi interne d'un moule de centrifugation puis, d'une façon connue en soi, on dépose les nappes de fibre et on les imprègne de la matière plastique liquide, en particulier d'une résine époxyde, par centrifugation.

12. Procédé suivant la revendication 11, caractérisé en ce que les bords de la pellicule métallique qui s'étendent dans la direction longitudinale du moule de centrifugation se chevauchent mutuellement, de préférence de plusieurs centimètres.

13. Procédé suivant la revendication 11 ou 12, caractérisé en ce que le manchon, avec la pellicule métallique disposée sur sa périphérie extérieure, de même que le tube intérieur muni de sa pellicule métallique, sont fabriqués, dans le cas de l'utilisation d'une résine époxyde, en particulier par le procédé de coulée centrifuge directe de la résine époxyde sur la surface interne de la pellicule métallique.

*Fig. 1*

*Fig. 2*

0 017 254